(19) Europäisches Patentamt
European Patent Office
Office européen des brevets

(11) **EP 3 975 036 A1**

(12) **EUROPEAN PATENT APPLICATION**

(43) Date of publication:
**30.03.2022 Bulletin 2022/13**

(21) Application number: **20198164.4**

(22) Date of filing: **24.09.2020**

(51) International Patent Classification (IPC):
**G06K 9/00** (2022.01)    **G06K 9/62** (2022.01)

(52) Cooperative Patent Classification (CPC):
**G06K 9/6271; G06K 9/6259; G06V 20/56**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Internal Automotive Software Egypt,**
**a limited liability company**
**Giza, Cairo (EG)**

(72) Inventor: **SOBH, Ibrahim**
**Giza, Cairo (EG)**

(74) Representative: **Hofstetter, Schurack & Partner**
**Patent- und Rechtsanwaltskanzlei**
**PartG mbB**
**Balanstrasse 57**
**81541 München (DE)**

(54) **AUTOMATIC VISUAL PERCEPTION AND TRAINING A VISUAL PERCEPTION ALGORITHM**

(57)    According to a method for training a visual perception algorithm comprising an artificial neural network (8), a labeled first set (9a) and an unlabeled second set (9b) of training images are provided. A translation algorithm comprising at least one generative adversarial network (11a, 11b, 12a, 12b) is trained to map the training images of the first set (9a) and the second set (9b) to a shared latent space (10) comprising a set of latent codes, each of them being uniquely associated to a respective training image of the first set (9a) and a corresponding training image (15b) of the second set (9b). The trained translation algorithm and the labels of the first set (9a) are used to train the neural network (8) to infer labels (14) for the second set (9b) from the latent space (10).

Fig.2

EP 3 975 036 A1

## Description

The present invention is directed to a computer implemented method for training a visual perception algorithm comprising an artificial neural network, wherein a labeled first set of training images is provided. The invention further relates to method for automatic visual perception, wherein an image is received by a computing unit, to a method for guiding a motor vehicle at least in part automatically, to an electronic vehicle guidance system for a motor vehicle and to a computer program product.

Computer vision algorithms, also denoted as visual perception algorithms, for example object detection algorithms, image classification algorithms or segmentation algorithms, may be used in automotive applications, for example for autonomous driving or driver assistance functions. For object detection, an image generated by a camera or a lidar system, for example, is provided as an input to the object detection algorithm, which is trained by means of machine learning to determine one or more bounding boxes for objects present in the image and corresponding object classes for the detected objects. Typical visual perception algorithms use artificial neural networks, for example convolutional artificial neural networks, CNNs, for example for predicting the bounding boxes and the object classes.

These known approaches for automatic visual perception rely on an appropriate training of the visual perception algorithm and the underlying neural network. To do so, large sets of training images have to be annotated or labeled to provide a ground truth for the training. The annotating or labeling of the training images is, however, time consuming and therefore costly and, in particular in case of lidar images as training images, complicated and requires specifically qualified personnel.

There exist powerful tools to simulate environments to test automatically driven vehicles, for example the open source simulator CARLA, described in the article by A. Dosovitskiy et al.: "CARLA: An Open Urban Driving Simulator", Proceedings of the 1st Annual Conference on Robot Learning, pages 1-16, 2017.

Furthermore, the publication by M. Liu et al.: "Unsupervised Image-to-Image Translation Networks", arXiv:1703.00848v6 describes an approach for using a latent space shared by two different domains of images to translate images from one of the domains to images in the other domain, wherein no predefined connection between the images translated into one another is known.

It is therefore an object of the present invention to provide an improved concept for automatic visual perception and training a visual perception algorithm, which reduces the amount of required labeled training images for training the algorithm.

This object is achieved by the respective subject-matter of the independent claims. Further implementations and preferred embodiments are subject-matter of the dependent claims.

The improved concept is based on the idea to provide a trained translation algorithm, which is capable of assigning each latent code of a latent space to a labeled image of a first set and unlabeled image of a second set of training images. A neural network is trained to predict labels for the unlabeled images by using the translation algorithm.

According to the improved concept, a computer implemented method for training a visual perception algorithm, in particular an object detection algorithm, is provided, wherein the visual perception algorithm comprises an artificial neural network. A labeled first set of training images is provided and an unlabeled second set of training images is provided. A translation algorithm comprising at least one generative adversarial network, GAN, is trained to map the training images of the first set and the training images of the second set to a shared latent space by a computing unit. The shared latent space comprises a set of latent codes, wherein each latent code is uniquely associated to a respective training image of the first set and to a corresponding training image of the second set. The trained translation algorithm and the labels of the training images of the first set are used by the computing unit to train the neural network to infer respective labels for the training images of the second set from the respective latent codes of the latent space.

The visual perception algorithm may be designed as an algorithm for object detection, object tracking, image classification, semantic segmentation, et cetera. Here and in the following, an object detection algorithm may be understood as a computer algorithm, which is able to identify one or more objects within a provided input image by specifying respective bounding boxes and assigning respective object classes to each of the bounding boxes, wherein the object classes may be selected from a predefined set of object classes. Therein, assigning an object class to a bounding box may be understood such that a corresponding confidence value or probability for the object identified within the bounding box being of the corresponding object class is provided. For example, the algorithm may provide such a confidence value or probability for each of the object classes for a given bounding box. Assigning the object class may for example include selecting or providing the object class with the largest confidence value or probability.

An image may for example be understood as a two-dimensional representation of an artificial, that is simulated, or real environment. In particular, an image may correspond to a camera image or a lidar image, also denoted as lidar point cloud, a radar image or a corresponding simulated camera image, lidar image or radar image.

Providing the first and the second set of training images may for example be understood such that the training images of the sets are stored in a computer-readable manner on a corresponding storage element.

Apart from the images themselves, the first set comprises a label, also denoted as annotation, for each of the training images of the first set. In other words, each of the training images of the first set is associated to a respective label, which is also provided, for example stored on the storage element. Each label comprises a set of parameters, also denoted as descriptors, defining image classes, or object classes pixel classes, bounding boxes, et cetera, depending on the actual task of the visual perception algorithm. In case of object detection, the descriptors or object detection descriptors define one or more bounding boxes and corresponding object classes for objects in the image. The mapping of the training images of the first set to the latent space may be understood such that only the actual training images but not their respectively associated labels are mapped. The unlabeled second set of training images does not comprise such labels.

The latent space may be understood as a multidimensional space of latent codes or, in other words, hidden or non-observable variables, which also could be considered as points or vectors in multiple dimensions. In particular, the number of dimensions of the latent space may be in the order of several tens, hundred or several hundreds, depending, for example, on the size and complexity of the first set and the second set.

The trained translation algorithm is able to identify pairs of images comprising a training image of the first set and a training image of the second set, respectively, which may be mapped on the same shared latent code. To this end, the at least one GAN may be used for image-to-image translation, as described in more detail in the publication of M. Liu et al. Each point, vector or latent code of the shared latent space therefore represents two corresponding images, one image of the first set and one image of the second set.

While the translation algorithm may be considered as a part of the visual perception algorithm, the trained translation algorithm alone is not able to carry out a visual perception task, for example an object detection task in the sense of determining bounding boxes or object classes. On the other hand, the trained neural network is able to carry out the visual perception task, however, on the latent space rather than on actual images.

The training of the translation algorithm is carried as an unsupervised training. In particular, the labels of the first set or any other labels or annotations are not required for training the translation algorithm, since the translation algorithm is based on the at least one GAN. The training of the neural network, however, makes use of the labels of the first set.

The translation algorithm may for example comprise four mappings, which may also be understood as sub-algorithms or sub-networks. A first mapping maps an image of the first set to a respective point on the latent space. A second mapping maps an image of the second set to a respective point on the latent space. A third mapping maps a latent code to a training image of the first set and a fourth mapping maps a latent code to a training image of the second set.

Using the wording of image-to-image translation, the training images of the first set correspond to a first domain, while the training images of the second set correspond to a second domain.

The second domain may for example correspond to images, which are real images of a real environment, meaning that they are generated by means of an environmental sensor system, such as a camera system or a lidar system, depicting an environment of the environmental sensor system. The first domain may also correspond to real images of a real environment, however, in contrast to the images of the second domain, the images of the first domain are labeled. Alternatively, the first domain may correspond to a simulated domain, meaning that the training images of the first domain correspond to images of a simulated environment.

A visual perception algorithm trained according to a computer implemented method according to the improved concept, results in a trained translation algorithm and a trained neural network, which are able to carry out visual perception tasks for real images without the need of any additional labels. Since only the training images of the first set are labeled but the training images of the second set are unlabeled, the total amount of required labeled training data is reduced, which consequently reduces time and costs for training the visual perception algorithm.

After training the visual perception algorithm as described, the trained translation algorithm may be used to translate a real image to a corresponding latent code in the shared latent space and the trained neural network may carry out the visual perception task in the latent space and carry over the resulting descriptors, for example bounding boxes and object classes, to the real image.

It is emphasized that the trained visual perception algorithm is able to conduct predictions on the domain of real images with only a reduced amount of ground truth data for that domain and, in case the first set corresponds to the simulated domain, without any ground truth data for the real domain at all. Therefore, in case of object detection, objects may be detected in domains with no or rare labels. The improved concept may be applied to images of various types, for example, of camera systems, lidar systems or radar systems.

According to several implementations, the training images of the second set are generated as images of at least one real environment of at least one environmental sensor system, in particular by using the at least one environmental sensor system. In particular, the at least one environmental sensor system may comprise a camera system, a lidar system or a radar system.

According to several implementations, the training images of the first set are generated as images of at least one simulated environment.

For example, a simulating tool like the open source simulator CARLA, for example in its version 0.9.9, may be used to generate the at least one simulated environment and the corresponding training images of the first set.

According to several implementations, the at least one simulated environment is constructed, for example by the computing unit or a further computing unit, by means of a computer simulation.

According to several implementations, the labels of the training images of the first set are generated based on the simulated images.

Using the simulated environment and the simulated images as the training images of the first set has the advantage that labeling or annotating the simulated images is much easier and much less time consuming than labeling or annotating real images. Since the computer simulation inherently has access to the information, which objects are generated at which locations in the simulated environment and so forth, this information may be extracted to generate the labels of the images of the first set at least in part automatically. Since also the training of the translation network is unsupervised, no ground truth data of real images have to be collected at all in such implementations.

According to several implementations, the translation algorithm comprises a first GAN and a second GAN, the first GAN comprising a first generator subnetwork and a first discriminator subnetwork and the second GAN comprising a second generator subnetwork and a second discriminator subnetwork.

In particular, the training of the translation algorithm comprises training the first GAN and the second GAN jointly, in particular considering them as a single network.

According to several implementations, the translation algorithm comprises a first encoder subnetwork and a second encoder subnetwork.

For example, the first encoder subnetwork together with the first generator subnetwork may constitute a first variational autoencoder and the second encoder subnetwork together with the second generator subnetwork may constitute a second variational autoencoder. The first encoder subnetwork may map a given training image in the first set to a corresponding latent code in the shared latent space. The first generator subnetwork may map the latent code back to the image of the first set. Analogously, the second encoder subnetwork maps a training image of the second set to a respective latent code in the shared space and the second generator subnetwork maps this latent code back to the training image of the second set. The discriminator subnetworks are designed to determine whether the mappings are consistent. In particular, in case the translation algorithm has been trained, a given image of the first set mapped to a corresponding latent code by the first encoder subnetwork and then mapped to a corresponding image of the second set by the second generator subnetwork is reproduced by applying the second encoder subnetwork to that image of the second set mapping to the corresponding latent code by means of the second encoder subnetwork and mapping this latent code back to the image of the first set by means of the first generator subnetwork.

In this way, by coupling the variational autoencoders to each other and to the corresponding GANs, the unsupervised training of the translation algorithm may be implemented.

According to several implementations, for training the neural network, a training image of the first set is selected, for example by the computing unit, and the trained translation algorithm, in particular the first encoder subnetwork, is used to map the selected training image to a respective latent code. The neural network is trained, in particular by the computing unit, to map the respective latent code associated to the selected image to a label of the associated training image of the second set depending on the respective label of the selected training image of the first set.

The selected training image of the first set and the associated training image of the second set are two images uniquely associated to the same corresponding latent code. For example, the selected training image is mapped to the respective latent code by using the first encoder subnetwork. The neural network predicts the label for the associated training image of the second set using the respective latent code as an input. The computing unit may then compare the predicted label with the actual label of the selected training image of the first set, for example by computing a predefined loss function and adapt network parameters of the neural network to optimize the corresponding deviation or loss. In particular, the computing unit may adapt the weights or biases of the neural network depending on a result of the comparison or the computation of the loss function.

The described routine may be carried out for each image of the first set. In particular, the selecting of a corresponding training image of the first set does not necessarily follow a specific rule or order.

In the described way, the neural network is in fact trained to perform automatic visual perception on the latent space rather than on the first or second domain. In this way, the known labels of the first domain may be exploited for the unlabeled second domain, in particular during inference phase or deployment phase of the neural network.

According to several implementations, the visual perception algorithm is designed as an object detection algorithm and the labels for the second set comprise, for each of the training images of the second set, a set of parameters defining one or more bounding boxes of objects and/or one or more object classes for the objects. The same holds analogously for the labels of the first set.

In principle, the bounding boxes may be of arbitrary shape. Any two-dimensional or quasi three-dimensional geometric figure may be used as a bounding box. Typically, rectangles or cuboids are used as bounding boxes.

The parameters defining a bounding box may for example comprise side lengths of the rectangles or cuboids, in particular length, width and, if applicable height, or coordinates of center points or other characteristic points of the rectangles or cuboids. Furthermore, in some implementations, the parameters defining the bounding boxes may also concern or comprise one or more orientation angles of the bounding box. The side lengths and/or location coordinates may be given in absolute form or, if applicable, as respective offsets from the values of one or more predefined anchor boxes.

According to several implementations, the translation algorithm comprises the first encoder subnetwork and the mapping of a first training image of the first set to the latent space comprises applying the first encoder subnetwork to the first training image.

According to several implementations, the translation algorithm comprises a second encoder subnetwork and the mapping of a second training image of the second set to the latent space comprises applying the second encoder subnetwork to the selected training image.

According to several implementations, the translation algorithm comprises the first GAN with the first generator subnetwork and the translation algorithm comprises a first variational autoencoder, VAE, comprising the first encoder subnetwork and the first generator subnetwork.

According to several implementations, the translation algorithm comprises the second GAN with the second generator subnetwork and the translation algorithm comprises a second VAE comprising the second encoder subnetwork and the second generator subnetwork.

According to the improved concept, also a method for automatic visual perception, in particular, an at least partly computer implemented method for automatic visual perception, is provided. To this end, an image is received by a computing unit, a trained visual perception algorithm comprising a trained artificial neural network and a trained translation algorithm is provided, for example, is stored on a storage element. The computing unit is used to map the image to a latent code within a latent space by applying the translation algorithm to the image and the computing unit is used to assign a set of descriptors to the latent code by applying the neural network, in particular to the latent code.

By means of a method for automatic visual perception according to the improved concept, the visual perception task, in particular object detection, is in fact carried out on the latent space rather than on the image itself. The set of descriptors assigned to the latent code may then also be considered as a respective set of descriptors assigned to the image. Considering object detection as the visual perception task, the descriptors may comprise parameters defining one or more bounding boxes for objects in the image and/or correspond object classes.

For the method for automatic visual perception according to the improved concept, only a reduced amount of labeled training images is required, as described above, since the translation algorithm and the neural network are combined in the described way.

According to several implementations of the method for visual perception according to the improved concept, the computing unit is used to assign the set of descriptors assigned to the latent code to the image.

According to several implementations, the translation algorithm comprises a second variational autoencoder with a second encoder subnetwork and the mapping of the image to the latent space comprises applying the second encoder subnetwork to the image.

In particular, the translation algorithm may be designed as described with respect to the computer implemented method for training a visual perception algorithm according to the improved concept.

According to several implementations, the visual perception algorithm is trained according to a computer implemented method for training a visual perception algorithm according to the improved concept.

According to several implementations of the method for automatic visual perception, an environmental sensor system, in particular of a motor vehicle, is used to generate the image, wherein the image depicts an environment of the environmental sensor system, in particular of the motor vehicle.

The environmental sensor system may for example comprise a camera system, a lidar system or a radar system.

According to the improved concept, also a method for guiding a motor vehicle at least in part automatically is provided. To this end, an environmental sensor system of the motor vehicle is used to generate an image, wherein an image depicts an environment of the motor vehicle, and a method for automatic visual perception according to the improved concept is carried out, in particular by a computing unit of the motor vehicle. The motor vehicle is guided at least in part automatically, for example, by the computing unit or a further computing unit or an electronic vehicle guidance system, in particular a control unit of the electronic vehicle guidance system, depending on the set of descriptors.

According to the improved concept, also an electronic vehicle guidance system for a motor vehicle is provided. The electronic vehicle guidance system comprises an environmental sensor system configured to generate an image, wherein the image depicts an environment of the environmental sensor system. The electronic vehicle guidance system further comprises a control unit, a storage element and a computing unit. The storage element stores a trained visual perception algorithm, in particular a visual perception algorithm trained according to a computer implemented method for training a visual perception algorithm according to the improved concept. The trained visual perception algorithm comprises a trained artificial neural network and a trained translation algorithm. The computing unit is configured to map the image to a latent code within a latent space by applying the translation algorithm to the image. The computing unit is configured to assign a set of descriptors to the latent code by applying the neural network. The control unit is configured to guide the motor vehicle at least in part automatically depending on the set of descriptors.

The control unit may be a part of the computing unit or may be implemented separately to the computing unit. The control unit may, for example, generate one or more control signals depending on the set of descriptors for guiding the motor vehicle. The one or more control signals may be provided to one or more actuators for guiding the vehicle.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

According to several implementations of the electronic vehicle guidance system, the environmental sensor system comprises a camera system, a lidar system or a radar system.

Further implementations of the electronic vehicle guidance system according to the improved concept follow directly from the various implementations of the method for automatic visual perception and vice versa and from the implementations of a method for guiding a motor vehicle according to the improved concept and vice versa. In particular, an electronic vehicle guidance system according to the improved concept may be configured or programmed to carry out a method for automatic visual perception or a method for guiding a motor vehicle according to the improved concept or the electronic vehicle guidance system carries out such a method.

According to the improved concept, also a motor vehicle comprising an electronic vehicle guidance system according to the improved concept is provided.

According to the improved concept, also a computer program comprising instructions is provided. When executed by a computer system, in particular by an electronic vehicle guidance system according to the improved concept, for example by the computing unit of the electronic vehicle guidance system, the instructions cause the computer system to carry out a computer implemented method for training a visual perception algorithm according to the improved concept, a method for automatic visual perception according to the improved concept or a method for guiding a motor vehicle according to the improved concept.

According to the improved concept, also a computer-readable storage medium storing a computer program according to the improved concept is provided.

The computer program as well as the computer-readable storage medium may be considered as respective computer program products comprising the instructions.

Further features of the invention are apparent from the claims, the figures and the description of figures. The features and feature combinations mentioned above in the description as well as the features and feature combinations mentioned below in the description of figures and/or shown in the figures alone may not only be encompassed by the improved concept in the respectively specified combination, but also in other combinations. Thus, implementations of the improved concept are encompassed and disclosed, which may not explicitly be shown in the figures or explained, but arise from and can be generated by separated feature combinations from the explained implementations. Implementations and feature combinations, which do not have all features of an originally formulated claim, may be encompassed by the improved concept. Moreover, implementations and feature combinations, which extend beyond or deviate from the feature combinations set out in the relations of the claims, may be encompassed by the improved concept.

In the figures:

Fig. 1     shows schematically a motor vehicle with an exemplary implementation of an electronic vehicle guidance system according to the improved concept;

Fig. 2     shows schematically various aspects of exemplary implementations of methods according to the improved concept; and

Fig. 3     shows a flow diagram of exemplary implementations of methods according to the improved concept.

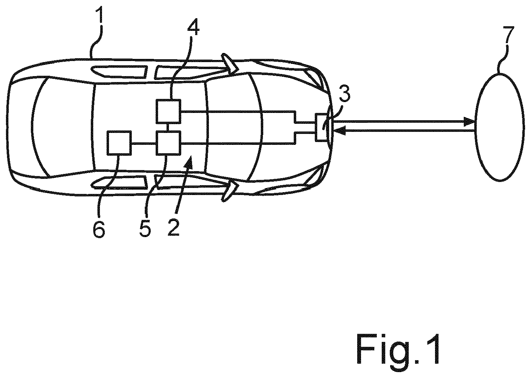

Fig. 1 shows schematically a motor vehicle 1 comprising an exemplary implementation of an electronic vehicle guidance system 2 according to the improved concept.

The electronic vehicle guidance system 2 comprises an environmental sensor system 3, which may for example be implemented as a camera or a lidar system. The environmental sensor system 3 is configured to depict an environment of the motor vehicle 1 comprising one or more objects 7. In case of a lidar system, the images generated by the environmental sensor system 3 correspond to respective point clouds, while in case of a camera system, camera images are generated depicting the environment.

The vehicle guidance system 2 further comprises a computing unit 5, which is connected to a storage element 6, as well as a control unit 4. In alternative implementations, the control unit 4 may be a part of the computing unit 5.

The storage element 6 stores a trained visual perception algorithm, which may for example have been trained offline, that is not by the computing unit 5 of the motor vehicle 1 itself. In the following, an object detection algorithm is described as a preferred embodiment for the visual perception algorithm. However, the explanations may be carried over analogously to other visual perception algorithms.

The object detection algorithm may be carried out by the computing unit 5 to identify respective bounding boxes for the object 7 in the environment of the motor vehicle 1 and corresponding object classes. The object detection algorithm has, in particular, been trained according to a computer implemented method for training an object detection algorithm according to the improved concept.

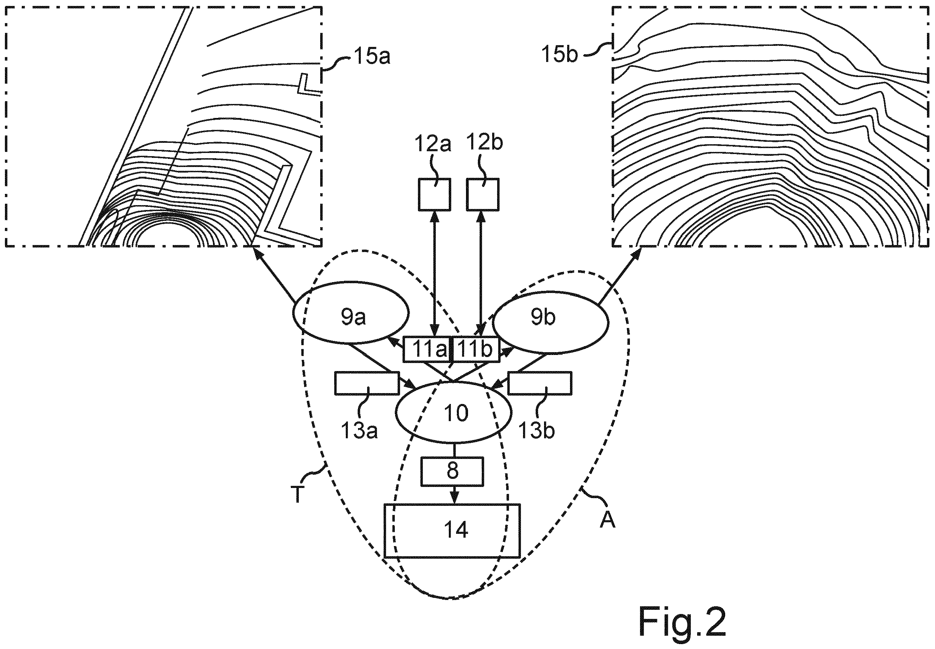

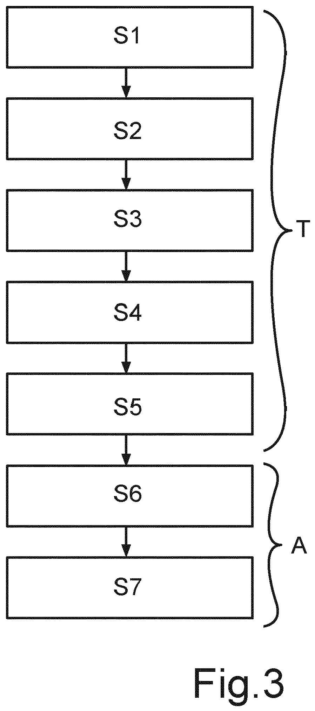

The training of the object detection algorithm and the function of the electronic vehicle guidance system 2 are explained in more detail with respect to exemplary implementations of computer implemented methods for training an object detection algorithm as well as exemplary implementations of methods for object detection according to the improved concept, in particular with reference to Fig. 2 and Fig. 3.

Fig. 3 shows a flow diagram of an exemplary implementation of a computer implemented method for training an object detection algorithm and an exemplary implementation of a method for object detection according to the improved concept. Therein, method steps S1 to S5 depict the training phase T, while method steps S6 and S7 represent the application phase A for carrying out the object detection based on the translation algorithm. Several aspects of the methods are depicted schematically in Fig. 2.

As depicted in Fig. 2, the object detection algorithm includes two coupled generative adversarial networks, GAN, for image-to-image translation, wherein a first GAN comprises a first generator subnetwork 11a and a first adversarial discriminator subnetwork 12a. A second GAN comprises a second generator subnetwork 11b and a second adversarial discriminator subnetwork 12b. Furthermore, the object detection algorithm comprises a first encoder subnetwork 13a, together with the first generator subnetwork 11a constituting a first variational autoencoder, VAE. The algorithm further comprises a second encoder subnetwork 13b, together with the second generator subnetwork 11b constituting a second VAE. The two GANs 11a, 11b, 12a, 12b and the two VAEs 11a, 11b, 13a, 13b may be considered to represent a translation algorithm for image-to-image translation. Furthermore, the object detection algorithm comprises an artificial neural network 8, which may for example be based on a CNN architecture.

In step S1 of the method, a labeled first set 9a of training images 15a is provided, in particular by storing it on a further storage element of a training computer system (not shown in the figures). To this end, computer simulations may be used to generate a simulated environment for the motor vehicle 1 and corresponding simulated images of the simulated environment. In addition, for each of the simulated images 15a, a corresponding label is generated and stored on the further storage element. The labels comprise parameters defining one or more bounding boxes for virtual or simulated objects in the simulated images 15a and corresponding object classes for these objects.

In step S2, a second set 9b for training images 15b is provided, in particular by storing it on the further storage element. In contrast to the first set 9a, the training images 15b of the second set 9b are not labeled. The training images 15b of the second set 9b may for example be generated as real images of real environmental sensor systems, for example of the environmental sensor system 3 of the motor vehicle 1 or of identical or similar environmental sensor systems of other vehicles.

In step S3, the translation algorithm is trained. In particular, the training algorithm is trained to map the training images 15a, 15b of the first and the second set 9a, 9b to a shared latent space 10. Therein, the latent space 10, also denoted as z-space, is a space of a plurality of dimensions, wherein each point or vector of this space, also denoted as latent code, represents one training image 15a of the first set 9a and one training image 15b of the second set 9b. In particular, after training the translation algorithm, each latent code of the latent space 10 is uniquely associated to exactly one training image 15a of the first set 9a and to a corresponding training image 15b of the second set 9b. Accordingly, using a single latent code, two respective images, one in the first set 9a, one in the second set 9b, may be generated using the generator subnetworks 11a, 11b.

For training the translation algorithm, the discriminator subnetworks 12a, 12b are used to evaluate the translation from the domain of the first set 9a to the domain of the second set 9b and vice versa carried out by the encoder subnetworks 13a, 13b and the generator subnetworks 11a, 11b, respectively. After the training, the encoder subnetworks 13a, 13b are able to map respective images 15a, 15b of both domains to the latent code in the shared latent space 10.

In particular, the following relations hold after training the translation algorithm:

$$X1 = G1(E2(X2)) \text{ and } X2 = G2(E1(X1)).$$

Therein, X1 represents an image 15a of the first set 9a and X2 represents an image 15b of the second set 9b. E1 and E2 represent the respective mappings carried out by the encoder subnetworks 13a, 13b and G1, G2 represent the mappings carried out by the generator subnetworks 11a, 11b, respectively. Furthermore,

$$E1(X1) = z = E2(X2),$$

wherein z denotes the shared latent code of the images represented by X1 and X2, respectively.

In step S4, the training images 15a of the first set 9a are mapped by the first encoder subnetwork 13a to the latent space 10. In step S5, the neural network 8 is trained to predict labels for the images 15b of the second set 9b based on the latent space 10. In other words, the neural network 8 is trained to map the latent codes to the predefined labels of the first set 9a. In this way, the known label of a given image 15a of the first set 9a is assigned to the corresponding image 15b of the second set 9b based on the shared latent code of these images.

For example, during a training epoch for training the neural network 8, the prediction of the label for a given image 15b of the second set 9b may be compared, for example by means of computing a corresponding loss function, to the label of the corresponding image 15a of the first set 9a represented by the same latent code. Depending on a respective deviation, the neural network 8 is adapted until predefined stopping criteria for the training are fulfilled.

In step S6, the environmental sensor system 3 of the motor vehicle 1 is used to generate a real image depicting the real environment of the motor vehicle 1 including the objects 7. Then, the second encoder subnetwork 13b of the trained translation algorithm is applied to the real image to generate a corresponding latent code of the shared latent space 10. In step S7, the trained neural network 8 is applied to the obtained latent code to predict one or more bounding boxes 14 and corresponding object classes for the objects 7.

As explained, in particular with respect to the figures, the improved concept implements automatic visual perception based on the shared latent space instead of object detection based on an image domain directly. In preferred embodiments, the latent space maps a simulated domain to a real domain of images. For the simulated domain, ground truth labels may be easily collected, while for the real domain, no ground truth data are required at all. In this way, the amount of required labeled training data is reduced such that objects may also be detected in domains with no or only few labels available. The improved concept may be applied to different types of images of different types of environmental sensor systems, such as cameras, lidar systems, or radar systems.

**Claims**

1. Computer implemented method for training a visual perception algorithm comprising an artificial neural network (8), wherein a labeled first set (9a) of training images is provided,
   **characterized in that**

   - an unlabeled second set (9b) of training images is provided;
   - a translation algorithm comprising at least one generative adversarial network (11a, 11b, 12a, 12b) is trained to map the training images of the first set (9a) and the training images of the second set (9b) to a shared latent space (10) comprising a set of latent codes, wherein each latent code is uniquely associated to a respective training image (15a) of the first set (9a) and to a corresponding training image (15b) of the second set (9b); and
   - the trained translation algorithm and the labels of the first set (9a) are used to train the neural network (8) to infer labels (14) for the second set (9b) from the latent space (10).

2. Computer implemented method according to claim 1,
   **characterized in that**
   for training the neural network (8),

   - a training image (15a) of the first set (9a) is selected and the trained translation algorithm is used to map the selected training image (15a) to a respective latent code; and
   - the neural network (8) is trained to map the respective latent code to a label of the associated training image (15b) of the second set (9b) depending on the respective label of the selected training image (15a) of the first set (9a).

3. Computer implemented method according to one of the preceding claims,
   **characterized in that**
   the training images of the first set (9a) are generated as simulated images of at least one simulated environment.

4. Computer implemented method according to one of the preceding claims,
   **characterized in that**
   the training images of the second set (9b) are generated as images of at least one real environment of at least one environmental sensor system (3).

5. Computer implemented method according to one of the preceding claims,
   **characterized in that**
   the labels (14) for the second set comprise, for each of the training images (15b) of the second set (9b), a set of parameters defining one or more bounding boxes and/or one or more object classes.

6. Computer implemented method according to one of the preceding claims,
**characterized in that**

- the translation algorithm comprises a first encoder subnetwork (13a) and the mapping of a first training image (15a) of the first set (9a) to the latent space (10) comprises applying the first encoder subnetwork (13a) to the first training image (15a); and/or
- the translation algorithm comprises a second encoder subnetwork (13b) and the mapping of a second training image (15b) of the second set (9b) to the latent space (10) comprises applying the second encoder subnetwork (13b) to the second training image (15b).

7. Computer implemented method according to claim 6,
**characterized in that**

- the translation algorithm comprises a first generative adversarial network (11a, 11b, 12a, 12b) with a first generator subnetwork (11a) and the translation algorithm comprises a first variational autoencoder (11a, 13a) comprising the first encoder subnetwork (13a) and the first generator subnetwork (11a); and/or
- the translation algorithm comprises a second generative adversarial network (11a, 11b, 12a, 12b) with a second generator subnetwork (11b) and the translation algorithm comprises a second variational autoencoder (11b, 13b) comprising the second encoder subnetwork (13b) and the second generator subnetwork (11b).

8. Method for automatic visual perception, wherein an image is received by a computing unit (5), **characterized in that**

- a trained visual perception algorithm, which comprises a trained artificial neural network (8) and a trained translation algorithm, is provided;
- the computing unit (5) is used to map the image to a latent code within a latent space (10) by applying the translation algorithm; and
- the computing unit (5) is used to assign a set of descriptors (14) to the latent code by applying the neural network (8).

9. Method according to claim 8,
**characterized in that**
the computing unit (5) is used to assign the set of descriptors (14) assigned to the latent code to the image.

10. Method according to one of claims 8 or 9,
**characterized in that**
the translation algorithm comprises a second variational autoencoder (11b, 13b) with a second encoder subnetwork (13a) and the mapping of the image to the latent space (10) comprises applying the second encoder subnetwork (13b) to the image.

11. Method according to one of claims 8 to 10,
**characterized in that**
the visual perception algorithm is trained according to a computer implemented method of one of claims 1 to 7.

12. Method according to one of claims 8 to 11,
**characterized in that**
an environmental sensor system (3) is used to generate the image, wherein the image depicts an environment of the environmental sensor system (3).

13. Method for guiding a motor vehicle (1) at least in part automatically,
**characterized in that**

- an environmental sensor system (3) of the motor vehicle (1) is used to generate an image, wherein the image depicts an environment of the motor vehicle (1);
- a method according to one of claims 8 to 10 is carried out; and
- the motor vehicle (1) is guided at least in part automatically depending on the set of descriptors (14).

14. Electronic vehicle guidance system for a motor vehicle (1), the electronic vehicle guidance system (2) comprising an environmental sensor system (3) configured to generate an image, wherein the image depicts an environment of the environmental sensor system (3), a control unit (4), a storage element (6) and a computing unit (5), **characterized in that**

- the storage element (6) stores a trained visual perception algorithm comprising a trained artificial neural network (8) and a trained translation algorithm;
- the computing unit (5) is configured to

- map the image to a latent code within a latent space (10) by applying the translation algorithm; and
- assign a set of descriptors (14) to the latent code by applying the neural network (8);

- the control unit (4) is configured to guide the motor vehicle (1) at least in part automatically depending on the set of descriptors (14).

15. Computer program product comprising instructions, which,

> - when executed by a computer system, cause the computer system to carry out a computer implemented method according to one of claims 1 to 7 or a method according to one of claims 8 to 11; or
> - when executed by an electronic vehicle guidance system (2) according to claim 14, cause the electronic vehicle guidance system (2) to carry out a computer implemented method according to one of claims 1 to 7 or a method according to one of claims 8 to 13.

Fig.1

Fig.2

Fig.3

Europäisches
Patentamt

European
Patent Office

Office européen
des brevets

# EUROPEAN SEARCH REPORT

**Application Number**

EP 20 19 8164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/156877 A1 (HRL LAB LLC [US]) 15 August 2019 (2019-08-15) * paragraph [0054] - paragraph [0071] * | 1-15 | INV. G06K9/00 G06K9/62 |
| A | HAEUSSER PHILIP ET AL: "Learning by Association - A Versatile Semi-Supervised Training Method for Neural Networks", 2017 IEEE CONFERENCE ON COMPUTER VISION AND PATTERN RECOGNITION (CVPR), IEEE COMPUTER SOCIETY, US, 21 July 2017 (2017-07-21), pages 626-635, XP033249400, ISSN: 1063-6919, DOI: 10.1109/CVPR.2017.74 [retrieved on 2017-11-06] * 3. Learning by association * | 1-11 | |
| A,D | M. LIU ET AL.: "Unsupervised Image-to-image Translation Networks", ARXIV:1703.00848V6, 23 July 2018 (2018-07-23), XP002802114, * the whole document * | 1-11 | TECHNICAL FIELDS SEARCHED (IPC) G06K |

The present search report has been drawn up for all claims

| Place of search | Date of completion of the search | Examiner |
|---|---|---|
| The Hague | 16 February 2021 | de Bont, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 975 036 A1**

## ANNEX TO THE EUROPEAN SEARCH REPORT
## ON EUROPEAN PATENT APPLICATION NO.

EP 20 19 8164

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2021

| Patent document cited in search report | Publication date | Patent family member(s) | Publication date |
|---|---|---|---|
| WO 2019156877 A1 | 15-08-2019 | CN 111542816 A<br>EP 3750081 A1<br>US 2019244107 A1<br>WO 2019156877 A1 | 14-08-2020<br>16-12-2020<br>08-08-2019<br>15-08-2019 |

EPO FORM P0459

For more details about this annex : see Official Journal of the European Patent Office, No. 12/82

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. DOSOVITSKIY et al.** CARLA: An Open Urban Driving Simulator. *Proceedings of the 1st Annual Conference on Robot Learning,* 2017, 1-16

- **M. LIU et al.** *Unsupervised Image-to-Image Translation Networks*